# EUROPÄISCHE PATENTANMELDUNG

(11) **EP 2 389 825 A1**
(43) Veröffentlichungstag der Anmeldung: **30.11.2011**
(21) Anmeldenummer: 10005615.9
(22) Anmeldetag: 28.05.2010
(51) Int. Cl.: A44B 17/00, B21D 22/24, F16B 21/07

(54) **Verbindungsvorrichtung**

(71) Anmelder: Dawedeit GmbH, 58515 Lüdenscheid (DE)
(72) Erfinder: Franke, Christian, 58509 Lüdenscheid (DE)
(74) Vertreter: Dörner, Kötter & Kollegen

(57) **Zusammenfassung**

Die Erfindung betrifft eine Vorrichtung zur Verbindung zweier Werkstücke (2,4), umfassend ein an dem ersten Werkstück (2) angeordnetes Dornstück (1) sowie ein an dem zweiten Werkstück (4) angeordneten Hülsenstück (3), welches mit dem Dornstück (1) dieses umschließend verbindbar ist, wobei das Dornstück (1) als einstückiges becherförmiges Blechumformteil mit doppelter Wandung und geschlossenem Boden (13) ausgebildet ist. Die Erfindung betrifft weiterhin ein Verfahren zur Herstellung eines solchen Dornstücks (1), wobei zunächst in ein Blechteil (2) ein hohlzylindrischer Napf (10) eingeformt wird und nachfolgend der Boden (13) des Napfes (10) in entgegengesetzter Richtung auf das Blechniveau eingestülpt wird.

## Beschreibung

Die Erfindung betrifft eine Vorrichtung zur Verbindung zweier Werkstücke nach dem Oberbegriff des Patentanspruchs 1. Die Erfindung betrifft weiterhin ein Verfahren zur Herstellung eines Dornstücks für eine solche Verbindungsvorrichtung nach dem Patentanspruch 8.

Zur schnellen und zuverlässigen Verbindung zweier Werkstücke an vorbestimmten Positionen ist es bekannt, an einem ersten Werkstück ein Dornstück vorzusehen, welches mit einem an einem zweiten Werkstück angeordneten Hülsenstück verbindbar ist. Dabei weist das Dornstück an seinem freien Ende einen vergrößerten Durchmesser auf. Durch die Überwindung des an dem freien Ende des Dornstücks vergrößerten Durchmessers durch das Hülsenstück ist eine form- und kraftschlüssige Verbindung erzielbar. Das Hülsenstück weist hierzu ein elastisches Element auf, welches sich nach Überwindung des durchmesservergrößerten Abschnitts des Dornstücks an diesen anlegt.

In der Textilindustrie ist eine solche Verbindungsvorrichtung in Form eines Druckknopfes bekannt. Dabei werden Dornstück und Hülsenstück auf die zu verbindenden Stoffelemente festgenäht oder -genietet und zum Schließen ineinandergedrückt. Damit das Dornstück in dem Hülsenstück gehalten ist und sich die Verbindung nur bei erheblicher Zugkraft öffnet, ist im Hülsenstück ein seitlich federndes Element angeordnet. Derartige Druckknöpfe sind meist aus Metall oder aus Kunststoff hergestellt. Auch in der Kraftfahrzeugindustrie ist bekannt, insbesondere an schwer zugänglichen Stellen Textil- oder Metallelemente über derartige Verbindungsvorrichtungen zu verbinden. Weitere Einsatzbereiche sind beispielsweise Verschlüsse von Behältnissen wie Aktentaschen oder Schmuckschatullen oder auch Zurrbänder, beispielsweise zur Fixierung eines Paars von Skiern.

Unter dem Begriff "Werkstück" ist nachfolgend jedwedes Objekt zu verstehen, welches mit einem zweiten Objekt verbunden werden soll. Dabei können die Werkstoffe aus jedwedem Material hergestellt sein.

Bei den vorgenannten Verbindungsvorrichtungen handelt es sich um Massenprodukte, die in den unterschiedlichsten Einsatzfeldern in sehr hohen Stückzahlen hergestellt werden. Dabei gestaltet sich die Herstellung der Verbindungsvorrichtungen bis heute als relativ aufwendig.

Hier will die Erfindung Abhilfe schaffen. Der Erfindung liegt die Aufgabe zu Grunde, eine Vorrichtung der vorgenannten Art zur Verbindung zweier Werkstücke zu schaffen, welche in großen Stückzahlen einfacher und kostengünstiger herstellbar ist. Gemäß der Erfindung wird diese Aufgabe durch die Merkmale des kennzeichnenden Teils des Patentanspruchs 1 gelöst.

Mit der Erfindung ist eine Vorrichtung der vorgenannten Art zur Verbindung zweier Werkstücke geschaffen, welche in großen Stückzahlen einfacher und kostengünstiger herstellbar ist. Durch die Ausbildung des Dornstücks als einstückiges becherförmiges Blechumformteil ist dessen Herstellung in einem einzigen kombinierten Umformprozess möglich. Durch die doppelte Wandung ist eine hohe Stabilität des Dornstücks erzielt, welche durch den geschlossenen Boden noch deutlich verbessert ist. Der geschlossene Boden verhindert zudem ungewolltes bodenseitiges Eindringen eines Fremdkörpers in das Hülsenstück.

In Weiterbildung der Erfindung ist die Wandung des Dornstücks konisch sich in Richtung des ersten Werkstücks verjüngend ausgebildet. Hierdurch ist eine form-und kraftschlüssige Verbindung mit dem an dem zweiten Werkstück angeordneten Hülsenstück ermöglicht.

In Weiterbildung der Erfindung ist das Hülsenstück in Art einer das Dornstück umschließenden Kappe ausgebildet. Hierdurch ist einem ungewollten Eintritt von Fremdkörpern in das Hülsenstück bzw. in die durch Dornstück und Hülsenstück gebildete Verbindung vermieden.

In weiterer Ausgestaltung der Erfindung weist das Dornstück ein irreversibel verformbares Ringteil auf, welches im Zuge eines Verschlussvorgangs mit dem Kopfstück unter Verformung kraftschlüssig mit dem Kopfstück verbindbar ist. Hierdurch ist eine manipulationssichere Verbindung erzielbar. Durch die irreversible Verformung des Ringteils ist ein Trennen einer erstmaligen Verbindung - auch nach anschließendem Wiederverbinden - erkennbar. Dadurch ist die Verbindung auch beispielsweise zur Versiegelung von Behältern oder Gehäusen verwendbar.

In weiterer Ausgestaltung der Erfindung ist das Ringteil in Form einer Federscheibe oder einer Rastscheibe ausgebildet. Hierdurch ist eine gute kraft- und formschlüssige Verbindung zwischen Dornstück und Hülsenstück erzielbar. Beim Einsatz einer Rastscheibe, die bevorzugt Rastelemente in Richtung des erweiterten Durchmessers des Dornstücks aufweist, ist ein unbefugtes Öffnen der Verbindung auf Grund von gebrochenen Rastarmen erkennbar.

In Weiterbildung der Erfindung ist das Ringteil mit dem Dornstück über eine nach innen gerichtete Bördelung verbunden. Hierdurch ist einer Manipulation des Ringstücks von außen entgegengewirkt. In Verbindung einer Ausbildung des Hülsenstücks in Art einer das Dornstück umschließenden Kappe ist sogar eine vollständig nach außen gekapselte und somit manipulationssichere Verbindung erzielbar.

In weiterer Ausgestaltung der Erfindung ist das Ringteil aus Kunststoff ausgebildet. Hierdurch ist ein elastisches Ringteil für einen guten Form- und Kraftschluss herstellbar, welches zusätzlich noch mit Sollbruchstellen versehen sein kann.

Der vorliegenden Erfindung liegt weiterhin die Aufgabe zu Grunde, ein Verfahren zur Herstellung eines Dornstücks für eine Verbindungsvorrichtung der vorgenannten Art zu schaffen, welche eine kostengünstige Herstellung solcher Dornstücke in großen Stückzahlen ermöglicht. Gemäß der Erfindung wird diese Aufgabe durch die Merkmale des Patentanspruchs 8 gelöst. Durch das Umstülpen des Napfes auf das Blechniveau wird eine doppelte Wandung erzielt, welche über das sich nunmehr auf dem Blechniveau befindende Bodenteil stabilisiert wird. Dabei entspricht die Höhe des Dornstücks bevorzugt etwa der Hälfte der Höhe des im ersten Verfahrensschritt eingeformten hohlzylindrischen Napfes.

Bevorzugt wird der Napf im ersten Verfahrensschritt derart ausgebildet, dass sein Boden in Form einer Kugelkappe ausgebildet ist. Nach Einstülpen des so ausgebildeten Bodens wird eine eng anliegende doppelte Wandung erzielt, welche in Richtung des Blechniveaus sich verjüngend konisch ausgebildet ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

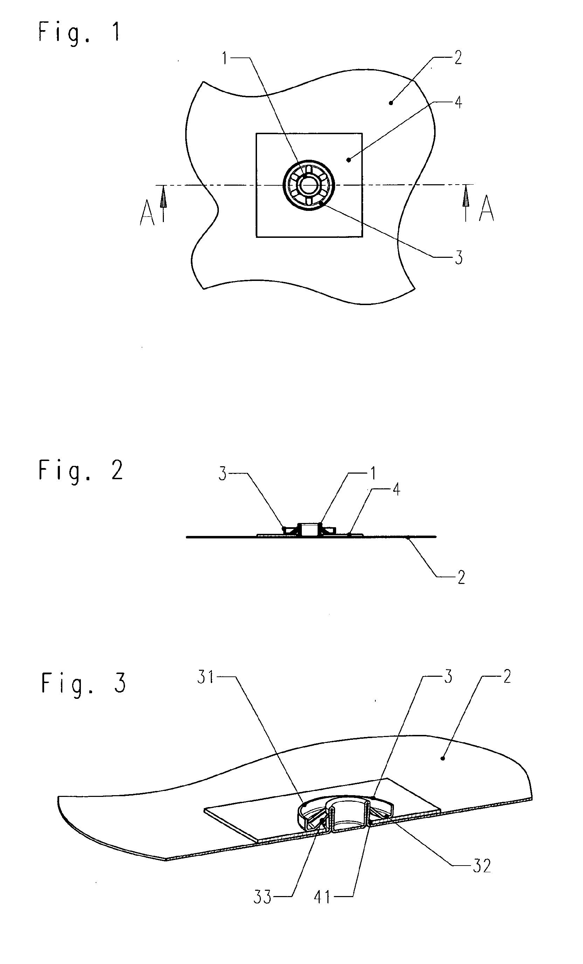

- Figur 1: die schematische Darstellung einer Vorrichtung zur Verbindung zweier Werkstücke in der Draufsicht;
- Figur 2: die Darstellung der Vorrichtung aus Figur 1 im Schnitt A-A;
- Figur 3: die räumliche Darstellung der Vorrichtung aus Figur 1 entlang der Schnittkante A-A und
- Figur 4: die schematische Darstellung eines Verfahrens zur Herstellung eines Dornstücks.

Die als Ausführungsbeispiel gewählte Vorrichtung besteht im Wesentlichen aus einem Dornstück 1, welches mit einem ersten Werkstück 2 verbunden ist sowie einem Hülsenstück 3, welches mit einem zweiten Werkstück 4 verbunden ist. Das erste Werkstück 2 ist im Ausführungsbeispiel ein Blechkörper, in den das Dornstück 1 direkt eingeformt ist. Dabei ist das Dornstück 1 als einstückiges becherförmiges Blechumformteil mit einer doppelten Wandung 11,12 und geschlossenem Boden 13 ausgebildet.

Das Hülsenstück 3 ist im Ausführungsbeispiel als Blechumformteil ausgebildet. Es besteht im Wesentlichen aus einem Ringkörper 31, in dem eine Federscheibe 32 angeformt ist. Die Federscheibe 32 weist nach innen umlaufende Federelemente 33 auf, welche in montiertem Zustand des Hülsenstücks 3 schräg an die äußere Wandung 11 des Dornstücks 1 angestellt sind. Das Dornstück 1 ist in Richtung des ersten Werkstücks 2 konisch zulaufend ausgebildet, so dass an seinem offenen Ende eine Durchmessererweiterung besteht, gegen die die Federelemente 33 im montierten Zustand des Hülsenstücks 3 verkantet sind.

Zur Verbindung des ersten Werkstücks 2 mit dem zweiten Werkstück 4 wird das eine Bohrung 41 aufweisende zweite Werkstück 4 auf das erste Werkstück 2 aufgelegt, so dass das Dornstück 1 durch die Bohrung 41 hindurchtritt. Dabei werden die Federelemente 33 des Ringkörpers 31 des Hülsenstücks 3 zunächst auseinandergespreizt und folgen anschließend der Außenkontur des Dornstücks 1, an dem sie schräg angestellt anliegen. Hierdurch ist eine kraft- und formschlüssige Verbindung zwischen Hülsenstück 3 und Dornstück 1 bewirkt.

Bei Aufbringen einer Zugkraft auf das zweite Werkstück 4 verkanten die Federelemente 33 gegen das Dornstück 1, wodurch ein Lösen der Verbindung bis zu einer Grenzkraft verhindert ist. Bei Überschreiten der Grenzkraft werden die Federelemente 33 irreversibel verformt, so dass eine einmal gelöste Verbindung ohne wieteres erkennbar ist. Selbstverständlich ist es im vorliegenden Fall nicht unbedingt erforderlich, dass das Hülsenstück mit dem zweiten Werkstück 4 fest verbunden ist. Ebenso kann das Hülsenstück 3 nach Positionierung des zweiten Werkstücks 4 nachträglich zur Fixierung des zweiten Werkstücks 4 auf das Dornstück 1 aufgebracht werden.

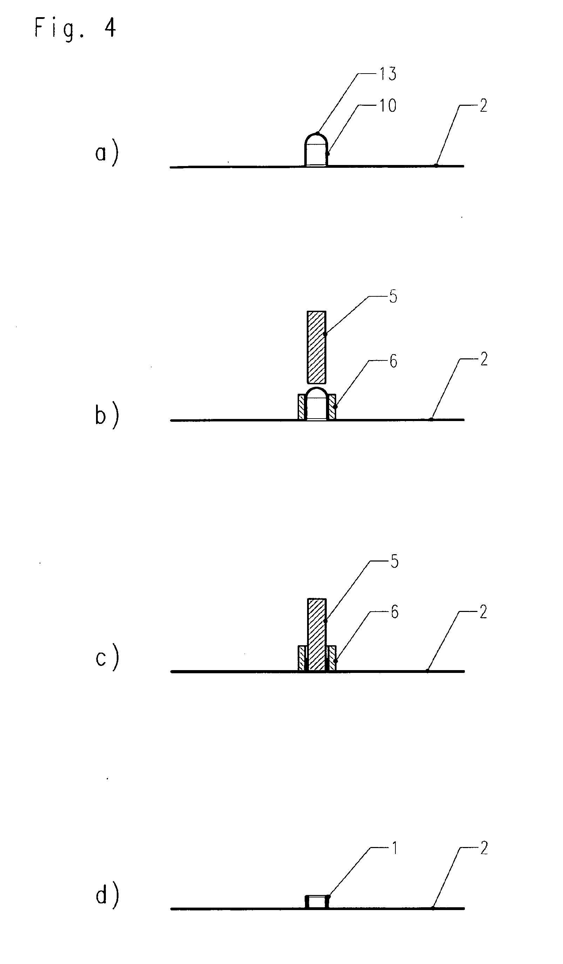

Die Herstellung des Dornstücks 1 ist schematisch in Figur 4 dargestellt. Dabei wird zunächst in das erste Werkstück 2 ein Napf 10 eingeformt, dessen Boden 13 in Art einer Kugelkappe ausgebildet ist. Im Ausführungsbeispiel erfolgt die Ausbildung des Napfes im Tiefziehverfahren. Anschließend wird der Boden 13 des Napfes 10 in entgegengesetzter Richtung zur Stempelwirkrichtung des vorangegangenen Zugs über einen Stempel 5 in Richtung des Blechteils 2 eingestülpt. Die Außenkontur des Napfes 10 wird dabei über ein Formwerkzeug 6 geführt. Im Ausführungsbeispiel weist der Napf eine Höhe von 10 mm mit einem Innendurchmesser von 6 mm auf. Das Blech 2 hat eine Stärke von 0,5 mm. Nach Einstülpen des Bodens 13 wird eine doppelte Wandung mit einer Gesamtstärke von 1 mm erzielt, wobei die Wandung 11, 12 in Richtung des Blechniveaus konisch zulaufend ausgebildet ist. Das so hergestellte Dornstück 1 weist eine Höhe von ca. 5 mm auf. Der zum Einstülpen des Bodens 13 zum Einsatz kommende Stempel 5 ist zylinderförmig ausgebildet und weist im Ausführungsbeispiel einen Außendurchmesser von 3,9 mm auf.

Die erfindungsgemäße Vorrichtung ist durch die einstückige Gestaltung des Dornstücks, welches durch einen einzigen kombinierten Umformprozess fertigbar ist, einfach und kostengünstig herstellbar. Durch den Boden 13 ist das Dornstück 1 nach außen verschlossen, so dass sich sogar manipulationssichere Verbindungen, wie sie beispielsweise für Versiegelungen von Behältnissen erforderlich sind, realisieren lassen.

## Patentansprüche

1. Vorrichtung zur Verbindung zweier Werkstücke, umfassend ein an dem ersten Werkstück angeordnetes Dornstück sowie ein an dem zweiten Werkstück angeordneten Hülsenstück, welches mit dem Dornstück dieses umschließend verbindbar ist, **dadurch gekennzeichnet, dass** das Dornstück (1) als einstückiges becherförmiges Blechumformteil mit doppelter Wandung (11, 12) und geschlossenem Boden (13) ausgebildet ist.

2. Vorrichtung nach Anspruch 1, **dadurch gekennzeichnet, dass** die Wandung (11, 12) des Dornstücks (1) konisch sich in Richtung des ersten Werkstücks (2) verjüngend ausgebildet ist.

3. Vorrichtung nach Anspruch 1 oder 2, **dadurch gekennzeichnet, dass** das Hülsenstück (3) in Art einer das Dornstück (1) umschließenden Kappe ausgebildet ist.

4. Vorrichtung nach einem der vorgenannten Ansprüche, **dadurch gekennzeichnet, dass** das Dornstück (1) ein irreversibel verformbares Ringteil aufweist, welches im Zuge eines Verschlussvorgangs mit dem Dornstück (1) unter Verformung kraftschlüssig mit dem Dornstück (1) verbindbar ist.

5. Vorrichtung nach Anspruch 4, **dadurch gekennzeichnet, dass** das Ringteil in Form einer Federscheibe (32) oder einer Rastscheibe ausgebildet ist.

6. Vorrichtung nach Anspruch 4 oder 5, **dadurch gekennzeichnet, dass** das Ringteil mit dem Dornstück (1) über eine nach innen gerichtete Bördelung verbunden ist.

7. Vorrichtung nach einem der Ansprüche 4 bis 6, **dadurch gekennzeichnet, dass** das Ringteil aus Kunststoff ausgebildet ist.

8. Verfahren zur Herstellung eines Dornstücks (1) für eine Verbindungsvorrichtung nach einem der vorgenannten Ansprüche, wobei zunächst in ein Blechteil (2) ein hohlzylindrischer Napf (10) eingeformt wird und nachfolgend der Boden (13) des Napfes (10) in entgegengesetzter Richtung auf das Blechniveau eingestülpt wird.

9. Verfahren nach Anspruch 8, **dadurch gekennzeichnet, dass** die Höhe des Dornstücks (1) etwa der Hälfte der Höhe des im ersten Verfahrensschritt eingeformten hohlzylindrischen Napfes (10) entspricht.

10. Verfahren nach Anspruch 8 oder 9, **dadurch gekennzeichnet, dass** der Napf (10) derart ausgebildet wird, dass sein Boden (13) die Form einer Kugelkappe aufweist.
